(19) Europäisches Patentamt
European Patent Office
Office européen des brevets

(11) Publication number : 0 529 849 A1

(12) # EUROPEAN PATENT APPLICATION

(21) Application number : 92307236.7

(22) Date of filing : 07.08.92

(51) Int. Cl.$^5$ : **C09B 35/10**, C09B 67/22, C09B 67/10, C09B 67/18, C09B 35/035, C09B 35/037, C09B 35/20, C09B 35/03

(30) Priority : 09.08.91 GB 9117292

(43) Date of publication of application : 03.03.93 Bulletin 93/09

(84) Designated Contracting States : BE DE DK ES FR GB IT

(71) Applicant : CIBA-GEIGY AG
Klybeckstrasse 141
CH-4002 Basel (CH)

(72) Inventor : Mordente, Alison
17 Glen Finlet Crescent
Neilston, Glasgow, Scotland (GB)
Inventor : Tuck, Brian
21 Whitelea Crescent, Kilmalcolm
Renfrewshire, Scotland (GB)

(74) Representative : Sparrow, Kenneth D.
CIBA-GEIGY PLC. Patent Department, Central Research, Hulley Road
Macclesfield, Cheshire SK10 2NX (GB)

(54) **Coupling process.**

(57) A process for the production of a diarylide pigment comprising a) coupling a tetrazo component with substantially the stoichiometric proportion of one or more coupling components ; b) in the pigment reaction mixture so obtained, coupling a tetrazo component with substantially the stoichiometric proportion required of one or more coupling components, provided that the total number of coupling components used in steps a) and b) is at least three ; and c) subjecting the pigment so obtained to an after-treatment.

EP 0 529 849 A1

The present invention relates to a process for the production of diarylide pigments, and in particular to a process for the production of diarylide pigments using a sequential coupling process.

In British Patent Specification No. 1090794, there is described a process for the manufacture of mixtures of water-insoluble diazo pigments by coupling 1 mol of tetrazotised 4,4′-diamino-3,3′-dichlorodiphenyl with 2 mols of a mixture of 1-acetoacetylamino-2-methoxy benzene and 1-acetoacetylamino-2, 4-dimethyl benzene, or with 2 mols of a mixture of 1-acetoacetylamino-2-methoxybenzene and 1-acetoacetylamino-2,5-dimethoxy-4-chlorobenzene. The process is a one step technique which results in a mixture of one asymmetrical and two symmetrical diarylide pigments.

The process so described in GB 1090794 is extended, in subsequent GB I111050 to use a wider range of coupling components and, in GB 1lll490 to use three or more coupling components. In each of GB 1111050 and GB 1lll490, it is clear from the respective disclosures that the coupling operation is effected as a single step.

In US 4341701 there is described a two stage coupling process for producing monoazo or disazo pigments, which comprises firstly adding to a solution of a diazonium and/or tetrazonium salt of an aromatic or heterocyclic amine, a solution or suspension containing 0.1-50% by weight of the theoretically required total weight of one or more coupling component; and, secondly, completing the coupling reaction by adding the partially coupled product of the first stage to a solution or suspension of one or more coupling components which are identical to, or different from those used in the first stage.

We have now found that diarylide pigments, having improved properties, e.g. improved colour strength and gloss, are obtained by a sequential coupling technique.

Accordingly, the present invention provides a process for the production of a diarylide pigment, comprising a) coupling a tetrazo component with substantially the stoichiometric proportion of one or more coupling components; b) in the pigment reaction mixture so obtained, coupling a tetrazo component with substantially the stoichiometric proportion required of one or more coupling components, provided that the total number of coupling components used in steps a) and b) is at least three; and c) subjecting the pigments so obtained to an after treatment.

The tetrazo components used in steps a) and b), respectively, may be the same or different and may be, e.g., 3,3′-dichlorobenzidine, 2,2′,5,5′-tetrachlorobenzidine, 3,3′-dimethoxybenzidine or 3,3′-dimethyl benzidine. Preferably, the tetrazo component used in step a) and b) is the same, and is 3,3′-dichlorobenzidine.

Each coupling component used in steps a) and b), respectively, of the process of the present invention is preferably an acetoacetarylide or an arylpyrazolone.

Acetoacetarylide coupling components used are preferably those having the formula (I):

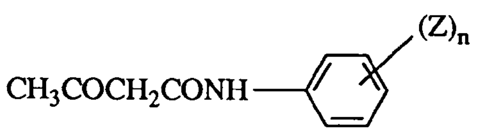

I

in which each substituent Z is the same or different and each is hydrogen, chloro, bromo, nitro, amino, $C_1$-$C_6$ alkyl, $C_1$-$C_6$ alkoxy, phenyl or phenoxy, and n is 1, 2, 3, 4 or 5.

Specific examples of acetoacetarylide coupling components of formula I include acetoacetanilide (AAA), acetoacet-m-xylidide (AAMX), acetoacet-o-toluidide (AAOT), acetoacet-p-toluidide (AAPT), acetoacet-o-anisidide (AAOA), acetoacet-o-chloroanilide (AAOCA) and acetoacet-2,5-dimethoxy-4-chloroanilide (AADMCA).

Arylpyrazolone coupling components used are preferably those having the formula (II):

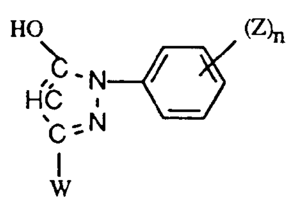

II

in which Z and n have their previous significance and W is methyl or ethoxycarbonyl.

Specific examples of arylpyrazolone coupling components of formula II are 3-methyl-1-phenyl-5-pyrazolone and 3-methyl-1-p-tolyl-5-pyrazolone.

Preferred coupling components for use in step a) or b) of the process of the present invention are AADMCA

and/or AAMX.

One or more, preferably one of the coupling components used in step a) of the process of the present invention may also be used in step b) of the process of the invention.

It is preferred that two coupling components are used in each of steps a) and b) of the process of the invention. Preferred pairs of coupling components for use in step a) or step b) are AAMX and AADMCA; AAMX and AAA; AAMX and AAOT; AAMX and AAOCA; and AAMX and AAOA.

When two or more coupling components are used in step a) and/or b) of the process of the present invention, the molar ratio of the first coupling component to the second and further coupling components may vary within a wide range, and may be the same or different in steps a) and b). For example, in the preferred instance in which two coupling components are used in each step, the molar ratio of the first coupling component to the second coupling component may range from 1 to 99 to 99 to 1, more preferably from 5 to 95 to 95 to 5.

The ratio of the total coupling component in step a) to the total coupling component in step b) may also vary within a wide range, preferably from 1 to 99:99 to 1, to especially from 5 to 95:95 to 5.

The coupling procedures used in each of steps a) and b) of the present invention are conventional techniques used in the pigment manufacturing art. Merely by way of example, firstly acid is added to a basic solution of the coupling component, or mixture thereof, to be used in step a) of the process, in order to precipitate the coupling component(s) as a fine dispersion. The tetrazo component is then coupled with the coupling component slurry to form a first pigment slurry. To this first pigment slurry, there may then be added the second coupling component, or mixture of second coupling components to be used in step b) of the process of the present invention. Finally, the second tetrazo component to be used in step b) of the present process is added and the second tetrazo component is coupled with the second coupling components to form a second pigment, admixed with the first-formed pigment.

The diarylide pigment produced according to steps a) and b) of the process of the present invention is subjected to an after-treatment by methods which are familiar to those skilled in the pigment manufacturing art. Typical after-treatments are described in GB 1356253 and GB 1356253.

One useful after-treatment is heating the aqueous pigment slurry, obtained at the end of step b) of the process of the present invention, at a temperature ranging from 70° to 130°C preferably from 70° to 100°C.

A further useful after-treatment is treatment with an organic solvent such as an aromatic or aliphatic hydrocarbon, a chlorinated hydrocarbon, an alcohol, ester, ether, nitrile, nitro compound or heterocyclic compound, specific examples of which are tetralin, dibenzyl ether, o-dichlorobenzene and dibutyl sebacate;

Addition of an anionic, cationic, amphoteric or non-ionic surfactant is yet another after-treatment which may be used. Anionic sufactants which may be used are, e.g. alkyl-, aryl- or aralkyl sulphates or sulphonates; alkyl-, aryl- or aralkyl phosphates or -phosphonates; or carboxylic acids. Cationic surfactants which may be used are, e.g. primary-, secondary- or teriary amines, or quaternary salts of amines. Non-ionic surfactants which are suitable for use include long chain alcohols, alcohol- or amine/ethylene oxide condensates, amine oxides or phosphine oxides.

The diarylide pigment obtained by the process of the present invention may be after-treated with an aliphatic primary amine.

Such amines include, e.g. stearylamine, resin amine derived from wood rosin, N-alkyl-alkylenediamines, polyamines such as N-alkyl-tripropylenetetramine, tetraethylenepentamine or polyethylene imine, or ethoxylated di- or tri-amines.

A preferred after-treatment is the resination of the diarylide pigment produced according to the process of the invention, using a natural or synthetic resin. Resins which are soluble in alkaline solution and which may be precipitated onto the pigment with acid, are preferred. Such preferred resins are, e.g. wood rosin, or a rosin which has been chemically modified, e.g. by hydrogenation, disproportionation, polymerisation or by reaction with an organic reactant. The proportion of resin used in the after-treatment may vary within a wide range, and may amount to 1 to 60%, more preferably from 25 to 45% by weight, based on the weight of the final diarylide pigment produced by the process of this invention.

The properties of the diarylide pigment produced according to the present process may be modified by incorporation of a water-soluble azo dyestuff, preferably in an amount ranging from 0.1 to 25% by weight, based on the weight of the pigment.

The water-soluble azo dyestuff which is used to treat the diarylide pigment may be prepared by coupling i) a tetrazo component containing one or more water-solubilizing groups with a coupling component which is free from water-solubilizing groups; ii) a tetrazo component which is free from water-solubilizing groups with a coupling component containing one or more water-solubilizing groups; or iii) a tetrazo component and a coupling component each of which contains one or more water-solubilizing groups. Examples of such water-solubilizing groups are sulphonic acid groups and carboxylic acid groups and their water-soluble metal salts, especially alkali metal and alkaline earth metal salts, and ammonium salts; and amino groups or their salts with

acids such as aliphatic acids. Coupling method i) or ii) is preferred.

Examples of tetrazo components which contain one or more water-solubilizing groups are those derived from diamines having the formula:

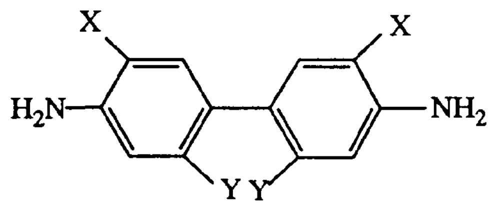

III

in which X and Y may be the same or different and each is hydrogen, methyl, $SO_3H$ or a metal or ammonium salt thereof, or $CO_2H$ a metal or ammonium salt thereof, provided that at least one of X and Y is $SO_3H$, $CO_2H$ or a salt thereof. Specific examples of such amines are 2,2′disulpho-benzidine and its mono-calcium, mono-barium- and di-sodium salts; 2,2′-disulpho-5,5′-dimethylbenzidine and its di-sodium salt; and 2,2′-di-carboxy-benzidine and its di-sodium salt; 3,3′-dichloro-4,4′-diaminodiphenyl-5-sulphonic acid; and 3,3′-dichloro-4,4′-diaminodiphenyl-5,5′-disulphonic acid.

Examples of coupling components which contain one or more water-solubilizing groups are acetoacetanilide-4-sulphonic acid and acetoacetanilide-4-carboxylic acid or their respective water-soluble salts, e.g. their sodium salts; and 4-amino-acetoacetanilide and its water-soluble salts e.g. its acetate salt.

Examples of tetrazo and coupling components which are free of water-solubilizing groups, are those which have been described herein before as precursors for the base pigment. 3,3′-Dichlorobenzidine is the preferred such tetrazo component.

If desired the azo dyestuff may be rendered insoluble, after its incorporation into the mixture of pigments, by converting the azo dyestuff into an insoluble salt of a metal of Group IB, IIB, IIIB or VIII of the Periodic Table of Elements. Particularly suitable metal salts are zinc sulphate, barium chloride and calcium chloride.

The diarylide pigment produced by the process of the present invention is useful in the colouration of surface coatings, especially printing inks, and in the colouration of plastics.

The following Examples further illustrate the present invention. All parts shown therein are parts by weight.

Example 1

Tetrazotization

228 parts by weight of 3,3′-dichlorobenzidine are tetrazotised in dilute hydrochloric acid, at 0-5°C, by the addition of a slight excess of sodium nitrite. Immediately before use, the excess nitrite is reacted by addition of sulphamic acid.

First Coupling

Step a)

A solution of 161 parts of acetoacet-m-xylidide and 36 parts of acetoacet-2,5-dimethoxy-4-chloroanilide, in 3100 parts of water containing 37 parts of sodium hydroxide, is acidified by the addition, over 15 minutes, of 63 parts of acetic acid disolved in 430 parts of water. The resultant slurry is coupled to completion, over approximately 1 hour, by the addition of part of the tetrazo solution prepared above, maintaining the pH at 4.6 - 4.7 by the simultaneous addition of dilute sodium hydroxide solution, and maintaining the temperature at 15-17°C, by the addition of ice.

Second Coupling

Step b)

To the pigment slurry prepared in step a), there is added a solution of 63 parts of acetic acid in 430 parts of water, followed by a solution of 143 parts of acetoacet-m-xylidide and 54 parts of acetoacet-o-toluilide in 1800 parts of water, containing 39 parts of sodium hydroxide. The slurry is again coupled, over approximately 1 hour at pH 4.6 - 4.7 and 15-17°C, by addition of the remaining tetrazo solution.

After-treatment

Step c)

The pH of the pigment slurry obtained in step b) is raised to 6.0 by the addition of dilute sodium hydroxide solution. A solution of 455 parts of the potassium salt of disproportionated tall oil resin (BUREZ 505A) in 4800 parts of water, is added, followed by 8 parts of a hindered phenol antioxidant (IRGANOX 1010). The temperature of the slurry is raised to 95°C, the pH adjusted to 5.5 by addition of 15% aqueous hydrochloric acid and the temperature held at 95° for 10 minutes before cooling to 70° by the addition of cold water. The product is collected by filtration, washed salt free and dried at 70°C in an air oven.

Examples 2-6

The procedure described in Example 1 is repeated, essentially as described, except that the coupling components in step a) and step b) are in the following proportions:

| | Step a) | | Step b) | |
|---|---|---|---|---|
| Example 2 | AAMX<br>AADMCA | 161 parts<br>36 parts | AAMX<br>AAOT | 94 parts<br>88 parts |
| Example 3 | AAMX<br>AAOT | 143 parts<br>54 parts | AAMX<br>AADMCA | 161 parts<br>36 parts |
| Example 4 | AAMX<br>AADMCA | 161 parts<br>36 parts | AAMX<br>AAOT | 62 parts<br>135 parts |
| Example 5 | AAMX<br>AADMCA | 241.5 parts<br>54 parts | AAMX<br>AAOT | 71.5 parts<br>27 parts |
| Example 6 | AAMX<br>AAOT | 214.5 parts<br>81 parts | AAMX<br>AADMCA | 80.5 parts<br>18 parts |

Example 7

Tetrazotization

258.4 parts by weight of 3,3'-dichlorobenzidine are tetrazotised as described in Example 1.

First Coupling

Step a)

A solution of 180 parts of acetoacet-m-xylidide and 40 parts of acetoacet-2,4-dimethyoxy-4-chloroanilide, in 1800 parts of water, containing 87 parts of sodium hydroxide, is acidified by the addition, over 15 minutes, of 37 parts of acetic acid and 24 parts of hydrochloric acid dissolved in 440 parts of water. The resultant slurry is coupled, over approximately 1 hour at pH 4.6 - 4.7 and 15 - 17°C, by the addition of part of the tetrazo solution prepared above.

Second Coupling

Step b)

To the pigment slurry prepared in step a), there is added a solution of 62 parts of acetic acid in 600 parts of water, followed by a solution of 160 parts of acetoacet-m-xylidide and 60 parts of acetoacetanilide in 2000 parts of water, containing 99 parts of sodium hydroxide. The slurry is again coupled, over approximately 1 hour

at pH 4.6 - 4.7 and 15 - 17°C, by addition of the remaining tetrazo solution.

After-Treatment

Step c)

The procedure described in Example 1 is repeated except that the quantities of reagents are as follows: 480 parts of BUREZ 505A in 4800 parts of water and 10 parts of IRGANOX 1010.

Example 8

The procedure described in Example 7 is repeated except that step b) is carried out first and is followed by step a).

Example 9

Inks are prepared from the products of Examples 1 - 8, at 15% pigmentation, by beadmilling into a typical heatset web offset varnish. The composition of the varnish is as follows:

| | |
|---|---|
| Varnish A | 46.75 parts |
| Varnish B | 29.75 parts |
| Distillate | 8.50 parts |

Where Varnish A (Thermogel K5-Lawter) is a rosin modified phenolic varnish with moderate gel structure and Varnish B (Sparkle-51-Lawter) is a phenolic varnish containing 15% alkyd and is ungelled.

Colouristic properties and print qualities are assessed from Prufbau prints prepared at 1.0 - 1.2g/m$^3$ film weight.

Relative to a conventional product prepared by the procedure of Example 1, but omitting step b), the products obtained from Examples 1 - 8 are superior in terms of;

| | |
|---|---|
| Strength | 10 - 15% stronger |
| Gloss | 10 - 20% higher (% relative) |

## Claims

1. A process for the production of a diarylide pigment comprising a) coupling a tetrazo component with substantially the stoichiometric proportion of one or more coupling components; b) in the pigment reaction mixture so obtained, coupling a tetrazo component with substantially the stoichiometric proportion required of one or more coupling components, provided that the total number of coupling components used in steps a) and b) is at least three; and c) subjecting the pigment so obtained to an after-treatment.

2. A process according to claim 1 in which the tetrazo component used in each of steps a) and b) is the same compound.

3. A process according to claim 2 in which the tetrazo component is 3,3′-dichlorobenzidine.

4. A process according to any of the preceding claims in which each coupling component used in steps a) and b), is an acetoacetarylide or an arylpyrazolone.

5. A process according to claim 4 in which the acetoacetarylide coupling component has the formula (I):

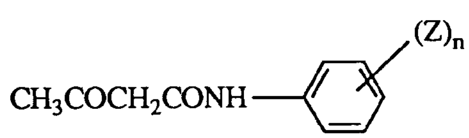

I

in which each substituent Z is the same or different and each is hydrogen, chloro, bromo, nitro, amino, $C_1$-$C_6$ alkyl, $C_1$-$C_6$ alkoxy, phenyl or phenoxy, and n is 1, 2, 3,4 or 5.

6. A process according to claim 5 in which the coupling component of formula I is acetoacetanilide, acetoacet-m-xylidide, acetoacet-o-toluidide, acetoacet-p-toluidide, acetoacet-o-anisidide, acetoacet-o-chloroanilide, or acetoacet-2,5-dimethoxy-4-chloroanilide.

7. A process according to claim 4 in which the arylpyrazolone coupling component has the formula (II):

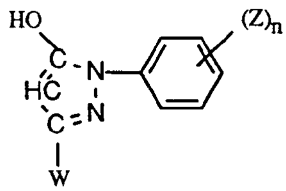

II

in which Z and n are as defined in claim 5 and W is methyl or carboxyethyl.

8. A process according to claim 7 in which the coupling component of formula II is 3-methyl-1-phenyl-5-pyrazolone or 3-methyl-1-p-totyl-5-pyrazolone.

9. A process according to any of claims 4 to 6 in which coupling components for use in step a) or step b) are acetoacet-2,5-dimethoxy- 4-chloroanilide and/or acetoacet-m-xylidide.

10. A process according to any of claims 4 to 9 in which one of the coupling components used in step a) of the process is also used in step b) of the process.

11. A process according to any of claims 4 to 10 in which two coupling components are used in each of steps a) and b) of the process.

12. A process according to claim 11 in which the pair of coupling components is acetoacet-m-xylidide and actoacet-2,5-dimethoxy-4-chloroanilide; acetoacet-m-xylidide and acetoacetanilide; acetoacet-m-xylidide and acetoacet-o-toluidide; acetoacet-m-xylidide and acetoacet-o-chloroanilide; or acetoacet-m-xylidide and acetoacet-o-anisidide.

13. A process according to any of the preceding claims in which two coupling components are used in each step and the molar ratio of the first coupling component to the second coupling component in each step ranges from 1 to 99 to 99 to 1.

14. A process according to claim 13 in which the molar ratio of the first coupling component to the second coupling component in each step ranges from 5 to 95 to 95 to 5.

15. A process according to any of the preceding claims in which the ratio of total coupling component in step a) to total coupling component in step b) ranges from 1 to 99:99 to 1.

16. A process according to claim 15 in which the ratio of total coupling component in step a) to total coupling component in step b) ranges from 5 to 95:95 to 5.

17. A process according to any of the preceding claims in which the after-treatment is one or more of a heat treatment, a treatment with an organic solvent, a treatment with an anionic, cationic, amphoteric or nonionic surfactant, a treatment with an aliphatic primary amine, a treatment with a resin and/or a treatment with a water-soluble azo dyestuff.

18. A process according to claim 17 in which the after-treatment comprises a treatment with a natural or synthetic resin.

19. A process according to claim 18 in which the resin is a wood rosin or a rosin which has been chemically modified.

20. A process according to any of claims 17 to 19 in which the proportion of resin used in the after-treatment ranges from 1 to 60% by weight, based on the weight of the final diarylide pigment produced.

**21.** A process according to claim 20 in which the proportion of resin used in the after-treatment ranges from 25 to 45% by weight, based on the weight of the final diarylide pigment produced.

**22.** A process according to any of claims 17 to 21 in which the after-treatment comprises treatment with a water-soluble azo dyestuff.

**23.** A diarylide pigment when produced by a process claimed in any of the preceding claims.

**24.** A surface coating or plastics containing, as colourant, a pigment claimed in claim 23.

**25.** A printing ink containing, as colourant, a pigment claimed in claim 23.

European Patent Office

# EUROPEAN SEARCH REPORT

Application Number

EP 92 30 7236

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A<br><br><br><br><br>D | EP-A-0 029 009 (CIBA-GEIGY)<br>* page 2, line 20 - line 23 *<br>* page 3, line 13 - page 8, line 21; examples 11-15 *<br>* claims 1,2,6,9 *<br>& US-A-4 341 701 | 1-25 | C09B35/10<br>C09B67/22<br>C09B67/10<br>C09B67/18<br>C09B35/035<br>C09B35/037<br>C09B35/20<br>C09B35/03 |
| A | US-A-4 648 907 (HAYS ET. AL.)<br>* column 3, line 36 - column 4, line 64; examples * | 1-25 | |
| A<br><br>D | FR-A-2 091 301 (CIBA-GEIGY)<br>* examples *<br>& GB-A-1 356 253 | 1-25 | |
| A | EP-A-0 139 944 (BASF AG)<br>* page 3, line 19 - line 39; examples * | 1 | |
| A | CH-A-105 849 (FARBENFABRIKEN VORM. FRIEDR. BAYER &CO)<br>* the whole document * | 1 | TECHNICAL FIELDS SEARCHED (Int. Cl.5 ) |
| A | DE-A-1 813 522 (HOECHST AG)<br>* examples * | 1 | C09B |

The present search report has been drawn up for all claims

| Place of search | Date of completion of the search | Examiner |
|---|---|---|
| THE HAGUE | 14 DECEMBER 1992 | KETTERER M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)